# EUROPEAN PATENT SPECIFICATION

(11) **EP 2 849 356 B1**
(45) Date of publication and mention of the grant of the patent: **06.07.2016**
(21) Application number: 13306253.9
(22) Date of filing: 12.09.2013
(51) Int. Cl.: H04B 7/155, H04W 56/00

(54) **Apparatus, vehicle, method and computer program for a mobile relay transceiver and a vehicle telematic module**
Vorrichtung, Fahrzeug, Verfahren und Computerprogramm für einen mobilen Relais-Sender-Empfänger und ein Telematikmodul eines Fahrzeugs
Appareil, véhicule, procédé et programme informatique pour un émetteur-récepteur relais mobile et module de télématique pour véhicule

(43) Date of publication of application: 18.03.2015
(73) Proprietor: ALCATEL LUCENT, 92100 Boulogne-Billancourt (FR); Bayerische Motoren Werke Aktiengesellschaft, 80809 München (DE)
(72) Inventor: Möhlmann, Ulrich, 70435 Stuttgart (DE); Dr. Fertl, Peter, 80799 München (DE); Wabner, Markus, 70435 Stuttgart (DE)
(74) Representative: 2SPL Patentanwälte PartG mbB

(56) References cited:
- EP-A1- 2 573 974
- WO-A1-03/005588
- WO-A1-2010/122128
- WO-A1-2012/158578
- WO-A1-2013/078100
- DE-A1-102007 029 952
- US-A1- 2011 016 343
- US-A1- 2011 103 434
- US-A1- 2012 225 646

## Description

### Technical Field

Embodiments relate to an apparatus, a vehicle, a method and a computer program for a mobile relay transceiver and for a vehicle telematic module, and more particularly, but not exclusively to obtaining a clock signal for a mobile relay transceiver.

### Background

Demands for higher data rates for mobile services are steadily increasing. At the same time modern mobile communication systems as 3rd Generation systems (3G) and 4th Generation systems (4G) provide enhanced technologies, which enable higher spectral efficiencies and allow for higher data rates and cell capacities. Users of today's handhelds become more difficult to satisfy. While old feature phones generated only data or voice traffic, current smartphones, tablets, and netbooks run various applications in parallel that can fundamentally differ from each other. Compared to conventional phones, this application mix leads to a number of new characteristics. For example, highly dynamic load statistics result, where the average load is increasing. Moreover, the number of networks for voice and data access is also increasing, therewith roaming options between these networks become available when multiple network layers overlap or at network boundaries, respectively.

Today's network planning and deployment in cellular communication systems is based on fixed, stationary base stations. However, the cellular radio coverage inside of vehicles, e.g. cars, buses, trains, ships, planes, etc., is subject to changing Radio Frequency (RF) conditions and penetration losses due to the vehicle's body. For this reason, customers, who use their Consumer Electronics (CE) devices, e.g. smartphone, tablet, computer, inside vehicles to consume mobile broadband data or voice services, may perceive a severe Quality-of-Service (QoS) degradation.

Document WO 2012/158578 describes a method and apparatus for time and frequency tracking in clustered femtocell deployments.

### Summary

Various embodiments provide an apparatus, a vehicle, a method and a computer program for a mobile relay transceiver and for a vehicle telematic module. The invention is defined by the appended claims. Embodiments may make use of an external clock reference signal in a mobile relay transceiver to obtain a clock signal for the mobile relay transceiver. Embodiments may therefore provide a cost efficient and resource efficient concept for a mobile relay transceiver. Embodiments may use an external high accuracy reference clock and may enable a reduction of efforts or expenses for a local oscillator at the mobile relay transceiver.

Embodiments provide an apparatus for a mobile relay transceiver. The mobile relay transceiver is operable to relay information between a mobile transceiver associated with the mobile relay transceiver and a base station transceiver of the mobile communication system. The mobile relay transceiver apparatus comprises an interface, which is operable to receive information related to a reference clock signal. The mobile relay transceiver apparatus further comprises a local oscillator module operable to generate an output clock signal based on the reference clock signal. The mobile relay transceiver apparatus further comprises a control module operable to provide the reference clock signal based on the information related to the reference clock signal.

Embodiments may enable an efficient implementation of the mobile relay transceiver apparatus by using information on an external reference clock signal and saving on efforts on an internal oscillator.

In some embodiments the interface may be operable to receive the information related to the reference clock signal from another component. For example, the information may be received from a receiver operable to receive radio signals from a navigation satellite, from a network access device, or from a vehicle telematics module. Embodiments may enable a flexible use of the mobile relay transceiver apparatus as it may be operable to communicate with components implemented in the same system the mobile relay transceiver is also comprised in.

For example, the interface may be operable to communicate using network timing protocol and the information related to the reference clock signal may be comprised in a network timing protocol packet data unit. Embodiments may further enable a flexible use by using the network timing protocol. The control module may be operable to react as a network timing protocol client using the interface. The interface may be further operable to communicate using internet protocol.

Embodiments provide a vehicle comprising the above described mobile relay apparatus. For example, the interface may be operable to communicate using a vehicle communication bus. In some embodiments the vehicle may further comprise a receiver operable to receive radio signals from a navigation satellite. The receiver may be operable to provide the information related to the reference clock signal to the control module via the interface. Embodiments may enable re-using a satellite navigation system's clock signal for synchronization of the mobile relay transceiver apparatus. In further embodiments, the vehicle may further comprise a vehicle telematics module operable to generate an internal clock signal. The vehicle telematics module may be operable to provide the information related to the reference clock signal based on the internal clock signal to the interface. Embodiments may enable re-using a vehicle telematics module's clock or a signal thereof for synchronization of the mobile relay transceiver apparatus. Embodiments provide a vehicle telematics module, which comprises a local oscillator module, which is operable to generate an oscillating signal. The vehicle telematics module further comprises an interface, which is operable to provide information related to the oscillating signal to an external component, for example, to a mobile relay station apparatus.

Embodiments further provide a method for a mobile relay transceiver. The method comprises receiving information related to a reference clock signal and generating the reference clock signal based on the information related to the reference clock signal. The method further comprises generating an output clock signal based on the reference clock signal.

Embodiments further provide a method for a vehicle telematics module. The method comprises generating an oscillating signal in the vehicle telematics module and providing information related to the oscillating signal to an external component.

Embodiments further provide a computer program having a program code for performing one or more of the above described methods, when the computer program is executed on a computer, processor, or programmable hardware. A further embodiment is a computer readable storage medium storing instructions which, when executed by a computer, processor, or programmable hardware, cause the computer to implement one of the methods described herein.

### Brief description of the figures

Some other features or aspects will be described using the following non-limiting embodiments of apparatuses and/or methods and/or computer programs and/or computer program products by way of example only, and with reference to the accompanying figures, in which
Fig. 1 illustrates a block diagram of an embodiment of an apparatus for a mobile relay transceiver;
Fig. 2 shows an embodiment of a vehicle in a communication network;
Fig. 3 depicts a block diagram of an embodiment using a GPS module and NTP;
Fig. 4 depicts a block diagram of an embodiment of a mobile relay transceiver apparatus and a block diagram of an embodiment of a vehicle telematics module;
Fig. 5 shows a block diagram of a flow chart of an embodiment of a method for a mobile relay transceiver; and
Fig. 6 shows a block diagram of a flow chart of an embodiment of a method for a vehicle telematics module.

### Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e.g*., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Embodiments of a mobile relay apparatus may improve the cellular coverage in a vehicle. A relay node may be used in order to connect multiple terminals inside of the vehicle and provide an aggregated connection to a stationary cellular communication system via a wireless backhaul link to a stationary cellular communications network, for example, over an external vehicle antenna. In the following the link between a stationary base station and an external antenna of a vehicle relay node will be denoted as relay link; the link between a relay node and end user terminals will be denoted as access link.

Such a relay node may, for example, correspond to a relay as defined in 3^{rd} Generation Partnership Project (3GPP) Release 10, a moving relay as currently discussed in 3GPP Release 12 study groups and in current research literature, a wireless repeater (analog or digital), or a femto cell with a wireless backhaul connection. In case of a femto cell, the wireless backhaul connection could be provided over a separate cellular communication terminal, e.g., a 2G/3G/4G modem. It is another finding that for the relay link and for the access link, respectively, the same or different frequency and spectrum resources can be used. Note that for the relay link and for the access link, respectively, the same or different frequency and spectrum resources can be used.

Note that in the following description of embodiments the term "femto cell" will be used as a synonym for the term "Home eNB" as used in 3GPP standards, for small cells, such as micro, pico, femto cells, etc., as well as relay nodes defined according to 3GPP Release 10 & following releases.

Femto cells and home eNodeBs (eNBs) like any radio base station may need a high accuracy reference clock, for example, to switch-on their transmitter. For cost reasons it may not be efficient for these femto cells to have a standalone high accuracy clock generator, like a Rubidium oscillator or a thermal controlled Quartz oscillator. Such high accuracy oscillators may be comprised in other components of a system, such as a vehicle. Instead the mobile relay transceiver apparatus may use the Network Timing Protocol (NTP) to adjust a local, low cost oscillator. This method may properly work when a data bandwidth of about 200Mbyte is available for both directions, up- and downlink each on the backhaul per month. This may not be an issue for today's state-of-the-art femto cells and home eNBs with fixed line backhauls, like Digital Subscriber Line (DSL). Here, the femto cells may be placed in very stable environmental conditions (e.g. room temperature), which may only require a clock synchronization from time to time (e.g. ever). However, this concept may not be directly used by vehicular relay nodes. The environmental temperatures of vehicles can vary significantly making it difficult to keep the clock synchronized. Moreover, in contrast to a state-of-the-art femto cell, a vehicular relay node may be switched on and off frequently, for example, every time the vehicle is turned on and off. In addition, NTP based synchronization may consume too much of the limited and costly Radio Frequency (RF) bandwidth resource, which may not be very efficient. Moreover, a wireless backhaul link used by vehicular relays may not be very reliable and stable in high mobility conditions and in rural areas.

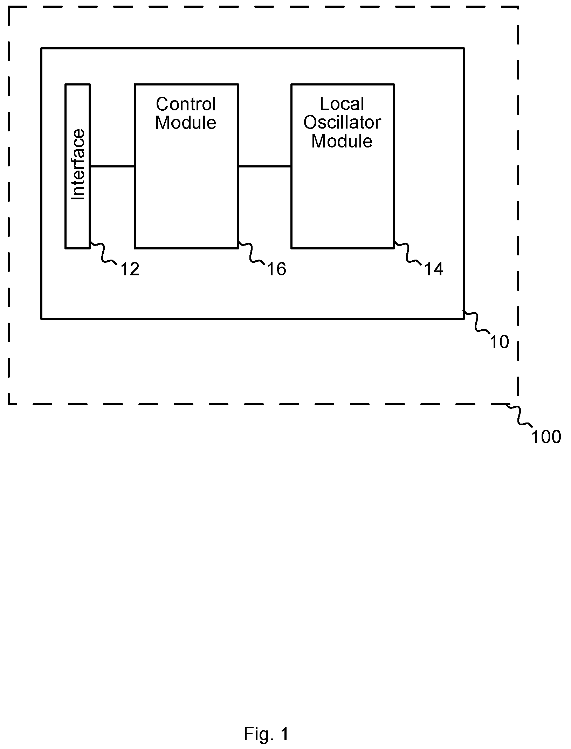

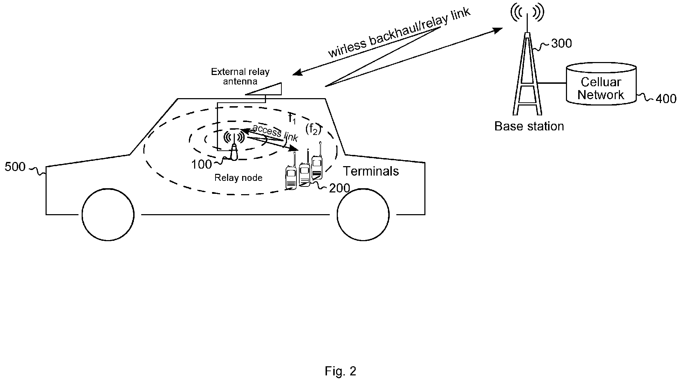

Fig. 1 shows a block diagram of an embodiment of an apparatus 10 for a mobile relay transceiver 100. In other words, the apparatus 10 may be adapted to or operable in a mobile relay transceiver 100; it may be operated by or comprised in a mobile relay transceiver 100. Embodiments may also provide a mobile relay transceiver 100 comprising the apparatus 10. Fig. 1 further shows an embodiment (dashed lines) of a mobile relay transceiver 100 comprising the apparatus 10. As further detailed in Fig. 2, the mobile relay transceiver 100 is operable to relay information between a mobile transceiver 200 associated with the mobile relay transceiver 100 and a base station transceiver 300 of a mobile communication system 400.

The mobile communication system may, for example, correspond to one of the mobile communication systems standardized by the 3^{rd} Generation Partnership Project (3GPP), e.g. Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and mobile communication network are used synonymously.

The mobile communication system may comprise a plurality of transmission points or base station transceivers operable to communicate radio signals with a mobile transceiver. In embodiments, the mobile communication system may comprise mobile transceivers, relay station transceivers and base station transceivers. The relay station transceivers and base station transceivers can be composed of one or more central units and one or more remote units.

A mobile transceiver may correspond to a smartphone, a cell phone, User Equipment (UE), a laptop, a notebook, a personal computer, a Personal Digital Assistant (PDA), a Universal Serial Bus (USB) -stick, a tablet computer, a car, etc. A mobile transceiver or terminal may also be referred to as UE or user in line with the 3GPP terminology. A base station transceiver can be located in the fixed or stationary part of the network or system. A base station transceiver may correspond to a remote radio head, a transmission point, an access point, a macro cell, a small cell, a micro cell, a pico cell, a femto cell, a metro cell etc. The term small cell may refer to any cell smaller than a macro cell, i.e. a micro cell, a pico cell, a femto cell, or a metro cell. Moreover, a femto cell is considered smaller than a pico cell, which is considered smaller than a micro cell. A base station transceiver can be a wireless interface of a wired network, which enables transmission and reception of radio signals to a UE, mobile transceiver or relay transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, etc. A relay station transceiver may correspond to an intermediate network node in the communication path between a base station transceiver and a mobile station transceiver. A relay station transceiver may forward a signal received from a mobile transceiver to a base station transceiver, signals received from the base station transceiver to the mobile station transceiver, respectively.

The mobile communication system may be cellular. The term cell refers to a coverage area of radio services provided by a transmission point, a remote unit, a remote head, a remote radio head, a base station transceiver, relay transceiver or a NodeB, an eNodeB, respectively. The terms cell and base station transceiver may be used synonymously. In some embodiments a cell may correspond to a sector. For example, sectors can be achieved using sector antennas, which provide a characteristic for covering an angular section around a base station transceiver or remote unit. In some embodiments, a base station transceiver or remote unit may, for example, operate three or six cells covering sectors of 120° (in case of three cells), 60° (in case of six cells) respectively. Likewise a relay transceiver may establish one or more cells in its coverage area. A mobile transceiver can be registered or associated with at least one cell, i.e. it can be associated to a cell such that data can be exchanged between the network and the mobile in the coverage area of the associated cell using a dedicated channel, link or connection. A mobile transceiver may hence register or be associated with a relay station or base station transceiver directly or indirectly, where an indirect registration or association may be through one or more relay transceivers.

In the embodiment depicted in Fig. 1 the mobile relay transceiver apparatus 10 comprises an interface 12 operable to receive information related to a reference clock signal. In some embodiments, an interface of an entity may correspond to any interface adapted to the respective communication or access technology, which may be wireless or wire line communication. An interface may use a certain access technology, protocol, medium, etc. As an example, in an embodiment the interface 12 may correspond to a bus interface or any interface allowing a communication, by means of analog or digital information, between the mobile relay apparatus 10 and another entity, e.g. control unit, an oscillator, a navigation module, another transceiver, etc. The mobile relay transceiver apparatus 10 further comprises a local oscillator module 14, which is operable to generate an output clock signal based on the reference clock signal. The local oscillator module 14 may correspond to one or more oscillator units, one or more oscillator devices, any means for oscillating etc. For example, the oscillator module 14 may correspond to an oscillating circuit or a resonator, which generates an oscillating signal based on the reference signal. The reference signal may correspond to another oscillating signal or a synchronization signal. In some embodiments the oscillating module may, for example, correspond to a frequency divider or multiplier, which generates an oscillating signal with a frequency or phase relation to the reference signal.

The mobile relay apparatus 10 further comprises a control module 16, which is operable to provide the reference clock signal based on the information related to the reference clock signal. The control module 16 is coupled to the interface 12 and the local oscillator module 14. The control module 16 may correspond to one or more control units, one or more control devices, or any means for controlling. In some embodiments the control module 16 may be implemented in software, which is executable on accordingly adapted hardware, such as a processor, a Digital Signal Processor (DSP), a multi-purpose processor, or the like. The control module 16 may receive the information related to the reference clock signal and then provide, generate or create the reference clock signal based thereon. For example, the control module 16 may obtain the information in terms of an oscillating signal from another oscillator through the interface 12. The control module 16 may then just provide or forward the oscillating signal as a reference clock signal or it may condition the signal, e.g. in terms of an impedance converter or any signal processing. In other embodiments the information related to the reference clock signal may be more indirect, e.g. timing information, which may be provided using accordingly adapted protocols, based on which the reference clock signal is then generated.

Embodiments may provide a method to derive a high accuracy clock for a vehicular relay node or transceiver 100 based on vehicle sensors or existing on-board vehicle infrastructure. Fig. 2 illustrates an embodiment of a vehicle 500 comprising an embodiment of the mobile relay transceiver 100. The relay transceiver 100 is operable in a vehicle 500 to relay information between a mobile transceiver 200 associated with the relay transceiver 100 and a base station transceiver 300 of a mobile or cellular communication system 400. In the following the vehicle 500 is assumed to be a car, as shown in Fig. 2. Fig. 2 illustrates an embodiment of a vehicle 500, which is shown as an exemplified car, and which comprises the relay transceiver 100 with the apparatus 10 as shown in Fig. 1. The relay transceiver 100 is denoted as relay node 100 in Fig. 2. Fig. 2 shows a plurality of mobile transceivers 200 which communicate with the relay station 100 inside the vehicle 500 via an access link.

The relay node 100 further comprises a relay antenna, which is external to the vehicle 500, and which is used to communicate with the base station 300 via a relay link, to which it is also referred to as wireless backhaul. Moreover, the communication network 400 is exemplified in Fig. 2 as being coupled with the base station transceiver 300. In some embodiments the mobile relay transceiver apparatus 10 may further comprise a transmitter module operable to transmit radio signals to the base station transceiver 300 based on the output clock signal. The transmitter module, which may as well be part of a transceiver module, may correspond to one or more transmitter units, one or more transmitter devices, any means for transmitting, etc. In embodiments a transmitter module may comprise typical transmitter components; a transceiver module may comprise typical transmitter and receiver components. Such components may comprise one or more transmit and/or receive antennas, a low Noise Amplifier (LNA), a Power Amplifier (PA), one or more filters, a converter, a mixer, a duplexer, a diplexer etc.

Fig. 2 illustrates one implementation scenario of an embodiment, which may use integrated vehicle on-board sensors to synchronize the clock of the local oscillator 14 of the vehicular relay node 100. The information related to the reference clock signal may correspond to information related to a clock signal from an oscillator external to the mobile relay apparatus 10, e.g. other components integrated or comprised in the vehicle 500. In particular, some embodiments may rely on integrated vehicle sensors that may usually be used for other vehicle services, but may already provide a high accuracy clock. For example, the interface 12 and the control module 16 may operable to receive the information from a receiver operable to receive radio signals from a navigation satellite. Navigation systems may require a Global Navigation Satellite System (GNSS) receiver, such as the Global Positioning System (GPS), which may allow deriving a very high accuracy clock from the GNSS signals received from the GNSS satellites.

Note, that GNSS satellites may use an atomic clock to rely on the same time base, i.e., international atomic time. In some embodiments, such a clock generator may be expanded by an NTP server, which could run on any application processor in the vehicle 500, and connect the vehicular relay node 100 via a vehicle bus, e.g., by means of Internet Protocol (IP) communication, e.g. over a Broadcom BroadReach Ethernet bus, or a dedicated interface/communication protocol to this NTP server. In some embodiments the interface 12 may be operable to communicate using NTP and the information related to the reference clock signal may be comprised in a NTP packet data unit. The control module 16 may be operable to react as an NTP client using the interface 12. In further embodiments the interface 12 may be further operable to communicate using IP. In some embodiments the interface 12 may be further operable to communicate using a vehicle communication bus, such as any real-time or almost real-time capable bus or, for example, a Controller Area Network (CAN) bus.

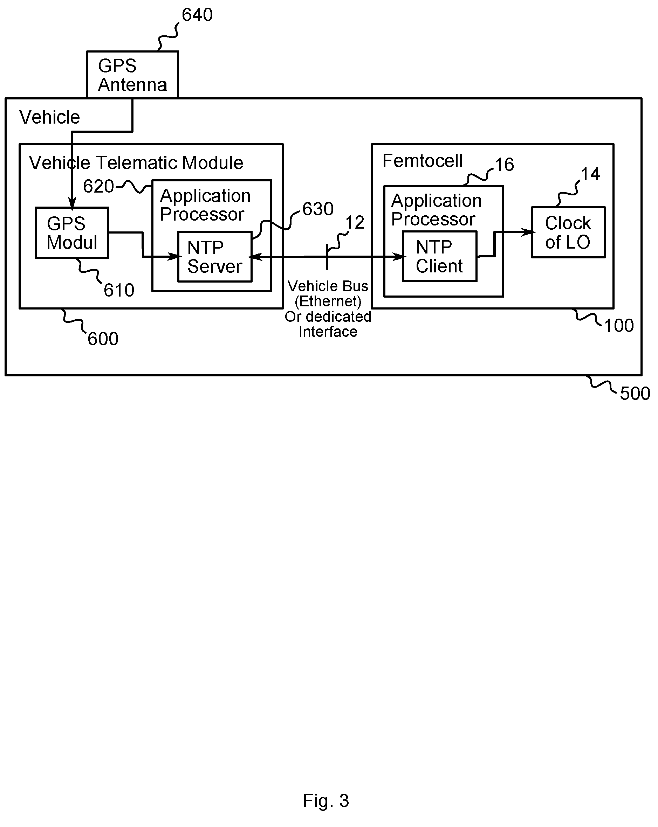

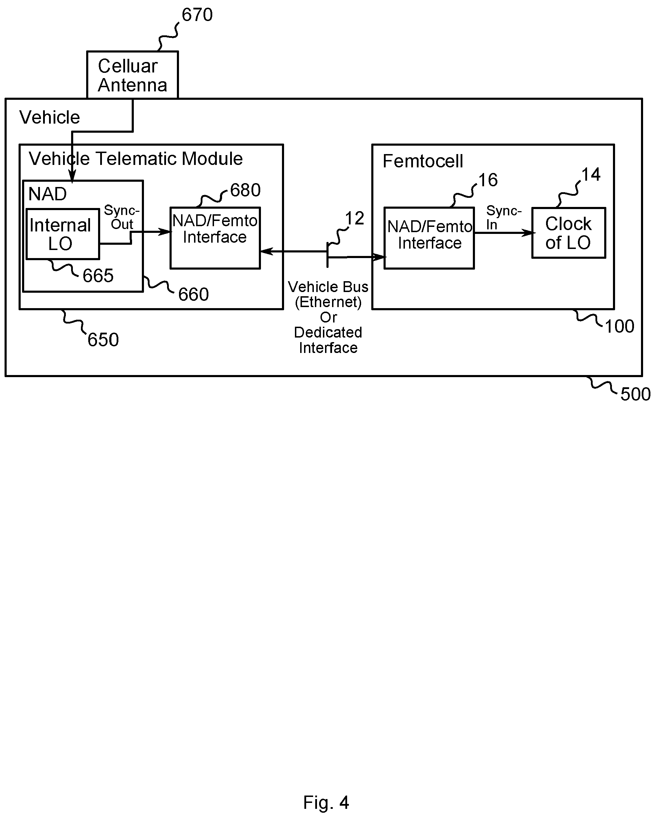

Fig. 3 depicts a block diagram of an embodiment a GPS module and NTP. Fig. 3 illustrates the vehicle 500 with a relay station transceiver 100 exemplified as femto cell. The control module 16 is exemplified as application processor also executing an NTP client. The interface 12 corresponds to a vehicle bus, which is implemented as an Ethernet interface and which may be implemented as any dedicated interface. In Fig. 3 the interface 12 is operable to receive the information from a vehicle telematic module 600. In the embodiment illustrated by Figs. 3 and 4 the vehicle 500 further comprises a vehicle telematics module 600, 650, which is operable to generate an internal clock signal. The vehicle telematics module 600, 650 is further operable to provide the information related to the reference clock signal based on the internal clock signal to the interface 12.

The vehicle 500 comprises a receiver 610 operable to receive radio signals from a navigation satellite. The receiver 610 is implemented as a GPS-module, which is coupled to a GPS antenna 640. The receiver 610 is operable to provide the information related to the reference clock signal to the control module 16 via the interface 12. The vehicle telematic module 600 further comprises an application processor 620, which implements an NTP server 630. For example, the NTP protocol may be run on vehicle local wired busses, or dedicated interfaces, and may not require any data bandwidth on the vehicular external backhaul. An NTP client 16 is also connected to the vehicle bus, or dedicated interface, and the NTP-client 16 is implemented as part of the control module 16, for example, it may be run or executed on an application processor in the vehicluar relay node 100. The control module 16 then delivers clock information to the Local Oscillator (LO) module 14 of the vehicular relay node 100, which then can be synchronized with high accuracy. Note that the use of the vehicle bus may allow for separating a vehicular on-board sensor that provides the high-accuracy clock and the vehicular relay node 100 in space. The relay node 100 and the oscillator of the GPS module 610 are located at different positions in the vehicle.

Fig. 4 depicts a block diagram of an embodiment using a Network Access Device (NAD) module 660. Fig. 4 illustrates a vehicle 500 with a relay station transceiver 100 exemplified as femto cell. The control module 16 is exemplified as NAD/Femto Interface. The interface 12 corresponds to a vehicle bus, which is implemented as an Ethernet interface and which may be implemented as any dedicated interface. In Fig. 4 the interface 12 is operable to receive the information from a vehicle telematic module 650. In Fig. 4 the vehicle telematic module 650 comprises an NAD module 660 with an internal LO 665 and a NAD/Femto Interface 680. The interface 12 is operable to receive the information from the NAD 660. The NAD module 660 is coupled to a cellular antenna 670. In the embodiment of Fig. 4 the vehicle on-board modules 650, 660, 665, 670, 680 are used, which already provide a high accuracy clock. In the present embodiment NAD 660 of the vehicle telematics module 650 is used.

The NAD 660 provides a local oscillator 665 which is synchronized with the mobile network. The local oscillator 665 of the NAD provides a Sync-Out signal through the interface 680, which can be used to synchronize other local oscillators. In the present embodiment the NAD 660, as part of the vehicle telematic module 600, is operable to generate the Sync-Out signal, for example, a corresponding contact or interface 680 may be present in or implemented at the NAD 660 such that the Sync-Out signal is made available. Figs. 3 and 4 further illustrate block diagrams of a vehicle telematic module 600, 650. The vehicle telematic module 600, 650 may correspond to one or more vehicle telematic units, one or more vehicle telematic devices, etc. The vehicle telematic module 600, 650 comprises a local oscillator module 610, 665 operable to generate an oscillating signal. Such a local oscillator module 610, 665 may be comprised in a GPS module 610 or an NAD 660. The local oscillator module 610, 665 may correspond to one or more local oscillator devices or units. For example the local oscillator may correspond to or comprise a high accuracy oscillator or high accuracy clock such as a high accuracy clock generator, like a Rubidium oscillator or a thermal controlled crystal/Quartz oscillator.

The vehicle telematic module 600, 650 further comprises an interface 680, which is operable to provide information related to the oscillating signal to an external component, for example, a mobile relay transceiver apparatus 10 or a mobile relay station 100. In some embodiments the interface 680 may correspond to a dedicated NAD/Femto interface 680 as shown in Fig. 4. In some embodiments the interface 680 may correspond to any interface adapted to the respective communication or access technology, which may be wireless or wire line communication. An interface may use a certain access technology, protocol, medium, etc. As a further example, in an embodiment the interface 680 may correspond to a bus interface or any interface allowing a communication, by means of analog or digital information, between the vehicle telematic module 600, 650 and another entity, e.g. a mobile relay transceiver apparatus 10, a mobile relay station 100, a transceiver, etc.

The Sync-Out signal may be directly connected to the LO 14 of the vehicular relay node 100 via a Sync-In interface 12 and the control module 16. The Sync-Out signal may first be converted into any kind of communication protocol, e.g. to IP packets, and then transmitted by using the vehicle bus, e.g., by means of IP communication over a Broadcom BroadReach Ethernet bus or a dedicated communications bus. The latter may allow for separating the vehicular on-board module 650 that provides the high-accuracy clock and the vehicular relay node 100 in space, i.e. they can be located at different positions in the vehicle. At the vehicular relay node 100 the sync-information serves as an input, e.g. via a Sync-In interface 12/16 at the LO 14 of the vehicular relay node 100, for synchronizing the LO 14.

Embodiments may help to save overhead and data bandwidth needed by vehicular relay nodes for wireless backhaul links, such as satellite or cellular based communication, which may save on the limited and costly Radio Frequency (RF) bandwidth resource. Embodiments may enable more efficient vehicular relay nodes. Moreover, embodiments may allow for a fast boot-up of the vehicular relay node 100, since the relay node's oscillator may be synchronized locally in the vehicle 500 and thus the relay node's transmitter may be switched on quicker.

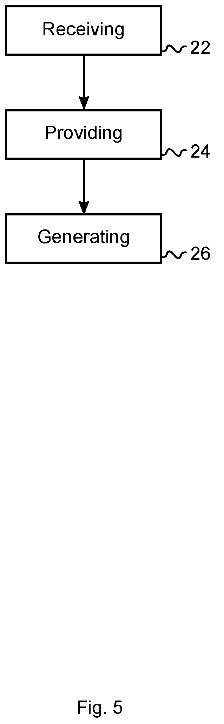

Fig. 5 shows a block diagram of a flow chart of an embodiment of a method for a mobile relay base station transceiver 100. The method comprises receiving 22 information related to a reference clock signal, and providing 26 the reference clock signal based on the information related to the reference clock signal. The method further comprises generating 26 an output clock signal based on the reference clock signal.

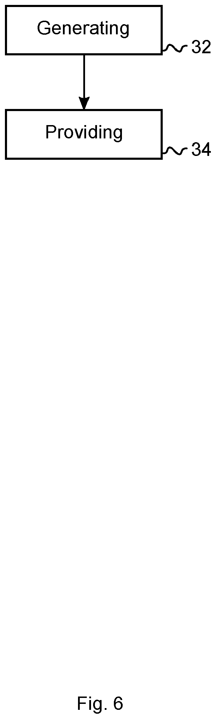

Fig. 6 shows a block diagram of a flow chart of an embodiment of a method for a vehicle telematics module 600, 650. The method comprises generating 32 an oscillating signal in the vehicle telematics module 600, 650. The method further comprises providing 34 information related to the oscillating signal to an external component.

A further embodiment is a computer readable storage medium storing instructions which, when executed by a computer, cause the computer to implement one of the methods described herein. Other embodiments are a computer program or a computer program product having a program code for performing anyone of the above described methods, when the computer program or computer program product is executed on a processor, computer, or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope as defined by the appended claims.

The functions of the various elements shown in the Figures, including any functional blocks labeled as "means", "means for oscillating", "means for controlling", "means for transmitting", "means for receiving", etc., may be provided through the use of dedicated hardware, such as "an oscillator", "a controller", "a transmitter", "a receiver", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is further to be noted that methods disclosed in the specification or in the claims may be implemented by a device having means for performing each of the respective steps of these methods.

## Claims

1. A mobile relay transceiver (100) for a vehicle comprising an apparatus (10), the mobile relay transceiver (100) being operable to relay information between a mobile transceiver (200) associated with the mobile relay transceiver (100) and a base station transceiver (300) of the mobile communication system (400), the apparatus (10) comprising
an interface (12) operable to receive information related to a reference clock signal from a vehicle telematics module (600) using wire line communication;
a local oscillator module (14) operable to generate an output clock signal based on the reference clock signal; and
a control module (16) operable to provide the reference clock signal based on the information related to the reference clock signal.

2. The apparatus (10) of claim 1, wherein the information related to the reference clock signal corresponds to information related to a clock signal from an oscillator external to the apparatus (10).

3. The apparatus (10) of claim 2, wherein the interface (12) is operable to receive the information from a receiver (610) operable to receive radio signals from a navigation satellite.

4. The apparatus (10) of claim 2, wherein the interface (12) is operable to receive the information from a network access device (600, 650).

5. The apparatus (10) of claim 1, wherein the interface (12) is operable to communicate using network timing protocol and wherein the information related to the reference clock signal is comprised in a network timing protocol packet data unit.

6. The apparatus (10) of claim 5, wherein the control module (16) is operable to react as a network timing protocol client using the interface (12).

7. The apparatus (10) of claim 1, wherein the interface (12) is further operable to communicate using internet protocol, or wherein the interface (12) is further operable to communicate using a vehicle communication bus.

8. The apparatus (10) of claim 1, further comprising a transmitter module operable to transmit radio signals to the base station transceiver (300) based on the output clock signal.

9. A vehicle (500) comprising the apparatus of claim 1.

10. The vehicle (500) of claim 9, further comprising a receiver (610) operable to receive radio signals from a navigation satellite, wherein the receiver (610) is operable to provide the information related to the reference clock signal to the control module (16) via the interface (12).

11. The vehicle (500) of claim 9, further comprising a vehicle telematics module (600; 650) operable to generate an internal clock signal, wherein the vehicle telematics module (600; 650) is operable to provide the information related to the reference clock signal based on the internal clock signal to the interface (12).

12. A vehicle telematic module (600;650) comprising
a local oscillator module (665) operable to generate an oscillating signal; and
an interface (680) operable to provide information related to the oscillating signal to a mobile relay transceiver (100) and wherein the interface (12) is adapted to wire line communication.

13. A method for a vehicle telematic module (600;650) comprising
generating (32) an oscillating signal in the vehicle telematics module (600;650); and
providing (34) information related to the oscillating signal to a mobile relay transceiver (100) using wire line communication.

14. A method for a mobile relay base station transceiver (100), the method comprising receiving (22) information related to a reference clock signal from a vehicle telematics module (600) using wire line communication;
providing (24) the reference clock signal based on the information related to the reference clock signal; and
generating (26) an output clock signal based on the reference clock signal.

15. A computer program having a program code for performing the method of one of the claims 13 or 14, when the computer program is executed on a computer or processor.

## Patentansprüche

1. Ein mobiler Relais-Sendeempfänger (100) für ein Fahrzeug umfassend eine Vorrichtung (10), wobei der mobile Relais-Sendeempfänger (100) wirksam ist, um Information zwischen einem mobilen Sendeempfänger (200), der dem mobilen Relais-Sendeempfänger (100) zugeordnet ist, und einem Basisstation-Sendeempfänger (300) des mobilen Kommunikationssystems (400) zu leiten, die Vorrichtung (10) umfassend
eine Schnittstelle (12), die wirksam ist, um Information bezogen auf ein Referenztaktsignal von einem Fahrzeugtelematikmodul (600) unter Verwendung von schnurgebundener Kommunikation zu empfangen;
ein Lokaloszillatormodul (14), das wirksam ist, um ein Ausgangstaktsignal basierend auf dem Referenztaktsignal zu erzeugen; und
ein Steuerungsmodul (16), das wirksam ist, um das Referenztaktsignal basierend auf der Information bezogen auf das Referenztaktsignal bereitzustellen.

2. Die Vorrichtung (10) gemäß Anspruch 1, wobei die Information bezogen auf das Referenztaktsignal Information bezogen auf ein Taktsignal von einem Oszillator außerhalb der Vorrichtung (10) entspricht.

3. Die Vorrichtung (10) gemäß Anspruch 2, wobei die Schnittstelle (12) wirksam ist, um die Information von einem Empfänger (610) zu empfangen, der wirksam ist, um Funksignale von einem Navigationssatelliten zu empfangen.

4. Die Vorrichtung (10) gemäß Anspruch 2, wobei die Schnittstelle (12) wirksam ist, um die Information von einem Netzwerkzugriffsgerät (600, 650) zu empfangen.

5. Die Vorrichtung (10) gemäß Anspruch 1, wobei die Schnittstelle (12) wirksam ist, um unter Verwendung eines Netzwerkzeitsynchronisierungsprotokolls zu kommunizieren und wobei die Information bezogen auf das Referenztaktsignal in einer Netzwerkzeitsynchronisierungsprotokollpaketdateneinheit enthalten ist.

6. Die Vorrichtung (10) gemäß Anspruch 5, wobei das Steuerungsmodul (16) wirksam ist, um als ein Netzwerkzeitsynchronisierungsprotokoll-Client unter Verwendung der Schnittstelle (12) zu reagieren.

7. Die Vorrichtung (10) gemäß Anspruch 1, wobei die Schnittstelle (12) ferner wirksam ist, um unter Verwendung eines Internetprotokolls zu kommunizieren, oder wobei die Schnittstelle (12) ferner ausgebildet ist, um unter Verwendung eines Fahrzeug-Kommunikationsbusses zu kommunizieren.

8. Die Vorrichtung (10) gemäß Anspruch 1, ferner umfassend ein Sendermodul, das wirksam ist, um Funksignale an den Basisstation-Sendeempfänger (300) basierend auf dem Ausgangstaktsignal zu übertragen.

9. Ein Fahrzeug (500), umfassend die Vorrichtung gemäß Anspruch 1.

10. Das Fahrzeug (500) gemäß Anspruch 9, ferner umfassend einen Empfänger (610), der wirksam ist, um Funksignale von einem Navigationssatelliten zu empfangen, wobei der Empfänger (610) wirksam ist, um die Information bezogen auf das Referenztaktsignal an das Steuerungsmodul (16) über die Schnittstelle (12) bereitzustellen.

11. Das Fahrzeug (500) gemäß Anspruch 9, ferner umfassend ein Fahrzeugtelematikmodul (600; 650), das wirksam ist, um ein internes Taktsignal zu erzeugen, wobei das Fahrzeugtelematikmodul (600; 650) wirksam ist, um die Information bezogen auf das Referenztaktsignal basierend auf dem internen Taktsignal an die Schnittstelle (12) bereitzustellen.

12. Ein Fahrzeugtelematikmodul (600;650), umfassend
ein Lokaloszillatormodul (665), das wirksam ist, um ein Oszillatorsignal zu erzeugen; und
eine Schnittstelle (680), die wirksam ist, um Information bezogen auf das Oszillatorsignal an einen mobilen Relais-Sendeempfänger (100) bereitzustellen und wobei die Schnittstelle (12) an schnurgebundene Kommunikation adaptiert ist.

13. Ein Verfahren für ein Fahrzeugtelematikmodul (600;650), umfassend
Erzeugen (32) eines Oszillatorsignals in dem Fahrzeugtelematikmodul (600;650); und
Bereitstellen (34) von Information bezogen auf das Oszillatorsignal an einen mobilen Relais-Sendeempfänger (100) unter Verwendung von schnurgebundener Kommunikation.

14. Ein Verfahren für einen mobilen Relais-Basisstation-Sendeempfänger (100), umfassend
Empfangen (22) von Information bezogen auf ein Referenztaktsignal von einem Fahrzeugtelematikmodul (600) unter Verwendung von schurgebundener Kommunikation;
Bereitstellen (24) des Referenztaktsignals basierend auf der Information bezogen auf das Referenztaktsignal; und
Erzeugen (26) eines Ausgangstaktsignals basierend auf dem Referenztaktsignal.

15. Ein Computerprogramm mit einem Programmcode zum Durchführen des Verfahrens gemäß einem der Ansprüche 13 oder 14, wenn das Computerprogramm auf einem Computer oder Prozessor ausgeführt wird.

## Revendications

1. Emetteur-récepteur de relais mobile (100) pour un véhicule comprenant un appareil (10), l'émetteur-récepteur de relais mobile (100) étant opérationnel pour relayer une information entre un émetteur-récepteur mobile (200) associé au émetteur-récepteur de relais mobile (100) et un émetteur-récepteur de station de base (300) du système de communication mobile (400), l'appareil (10) comprenant
une interface (12) opérationnelle pour recevoir une information concernant un signal d'horloge de référence d'un module télématique de véhicule (600) à l'aide d'une communication à fil;
un module oscillateur local (14) opérationnel pour générer un signal d'horloge de sortie sur la base du signal d'horloge de référence ; et
un module de commande (16) opérationnel pour fournir le signal d'horloge de référence sur la base de l'information concernant le signal d'horloge de référence.

2. Appareil (10) selon la revendication 1, dans lequel l'information concernant le signal d'horloge de référence correspond à une information concernant un signal d'horloge d'un oscillateur à l'extérieur de l'appareil (10).

3. Appareil (10) selon la revendication 2, dans lequel l'interface (12) est opérationnelle pour recevoir l'information d'un récepteur (610) opérationnel pour recevoir des signaux radio d'un satellite de navigation.

4. Appareil (10) selon la revendication 2, dans lequel l'interface (12) est opérationnelle pour recevoir l'information d'un dispositif d'accès au réseau (600, 650).

5. Appareil (10) selon la revendication 1, dans lequel l'interface (12) est opérationnelle pour communiquer à l'aide d'un protocole d'heure réseau, et dans lequel l'information concernant le signal d'horloge de référence est comprise dans une unité de données de paquet de protocole d'heure réseau.

6. Appareil (10) selon la revendication 5, dans lequel le module de commande (16) est opérationnel pour réagir comme un client de protocole d'heure réseau à l'aide de l'interface (12).

7. Appareil (10) selon la revendication 1, dans lequel l'interface (12) est en outre opérationnelle pour communiquer à l'aide d'un protocole Internet, ou dans lequel l'interface (12) est en outre opérationnelle pour communiquer à l'aide d'un bus de communication de véhicule.

8. Appareil (10) selon la revendication 1, comprenant en outre un module de transmetteur opérationnel pour transmettre des signaux radio à l'émetteur-récepteur de station de base (300) sur la base du signal d'horloge de sortie.

9. Véhicule (500) comprenant l'appareil selon la revendication 1.

10. Véhicule (500) selon la revendication 9, comprenant en outre un récepteur (610) opérationnel pour recevoir des signaux radio d'un satellite de navigation, dans lequel le récepteur (610) est opérationnel pour fournir l'information concernant le signal d'horloge de référence au module de commande (16) via l'interface (12).

11. Véhicule (500) selon la revendication 9, comprenant en outre un module télématique de véhicule (600; 650) opérationnel pour générer un signal d'horloge interne, dans lequel le module télématique de véhicule (600; 650) est opérationnel pour fournir l'information concernant le signal d'horloge de référence sur la base du signal d'horloge interne à l'interface (12).

12. Module télématique de véhicule (600;650) comprenant
un module oscillateur local (665) opérationnel pour générer un signal oscillant ; et
une interface (680) opérationnelle pour fournir une information concernant le signal oscillant à un émetteur-récepteur de relais mobile (100), et dans lequel l'interface (12) est adaptée à une communication à fil.

13. Procédé pour un module télématique de véhicule (600;650) comprenant le fait de
générer (32) un signal oscillant dans le module télématique de véhicule (600;650) ; et
fournir (34) une information concernant le signal oscillant à un émetteur-récepteur de relais mobile (100) à l'aide d'une communication à fil.

14. Procédé pour un émetteur-récepteur de station de base de relais mobile (100), comprenant le fait de
recevoir (22) une information concernant un signal d'horloge de référence d'un module télématique de véhicule (600) à l'aide d'une communication à fil;
fournir (24) le signal d'horloge de référence sur la base de l'information concernant le signal d'horloge de référence ; et
générer (26) un signal d'horloge de sortie sur la base du signal d'horloge de référence.

15. Programme d'ordinateur présentant un code de programme configuré pour réaliser le procédé selon l'une des revendications 13 ou 14, lorsque le programme d'ordinateur est exécuté sur un ordinateur ou processeur.
